Europäisches Patentamt

European Patent Office

Office européen des brevets

(19)

(11) Veröffentlichungsnummer: **0 285 823**
**A2**

(12) # EUROPÄISCHE PATENTANMELDUNG

(21) Anmeldenummer: 88103434.2

(22) Anmeldetag: 05.03.88

(51) Int. Cl.⁴: **B23Q 17/09**

(30) Priorität: 04.04.87 DE 3711434

(43) Veröffentlichungstag der Anmeldung:
12.10.88 Patentblatt 88/41

(84) Benannte Vertragsstaaten:
AT BE CH FR GB IT LI NL

(71) Anmelder: **Fried. Krupp Gesellschaft mit
beschränkter Haftung
Altendorfer Strasse 103
D-4300 Essen 1(DE)**

(72) Erfinder: **Gonzales, Juan Luis Perez
Bredeneyer Strasse 28
D-4300 Essen 1(DE)**

(54) Verfahren zur berührungslosen Bruch-, Verschleiss- und Kollisionsüberwachung von Werkzeugen.

(57) Es wird ein Verfahren zur berührungslosen Bruch-, Verschleiß-und Kollisionsüberwachung von wechselbaren Werkzeugen in Werkzeugmaschinen beschrieben, bei dem die relative Lageänderung zweier benachbarter Teile der Werkzeugmaschine, von denen mindestens eines durch die beim Zerspanen auftretenden Kräfte beansprucht ist, mittels eines Wegaufnehmers überwacht wird. Bei einer Lageänderung ändert sich die Ausgangsspannung des Wegaufnehmers. Dem Wegaufnehmer kann erforderlichenfalls im benachbarten Teil der Werkzeugmaschine ein geeignetes Bedämpfungsstück gegenüberstehen. Ferner wird ein Verfahren zur Ermittlung des günstigsten Anbringungspunktes des Wegaufnehmers beschrieben.

EP 0 285 823 A2

## Verfahren und Vorrichtung zur berührunglosen Bruch-, Verschleiß-und Kollisionsüberwachung von Werkzeugen

Die Anmeldung betrifft ein Verfahren und eine Vorrichtung zur berührungslosen Bruch-, Verschleiß-und Kollisionsüberwachung von Werkzeugen, insbesondere von solchen, die automatisch in Werkzeugmaschinen gewechselt werden können.

Bei zunehmender Automatisierung numerisch gesteuerter Maschinen wird mehr und mehr eine vom Bedienungspersonal unabhängige selbsttätige Überwachung der Werkzeuge gefordert. So sind indirekte Meßmethoden mechanisch, induktiv kapazitiv oder optisch abtastender Systeme bekannt, die nach jeder Bearbeitungsoperation das Werkzeug auf seinen einwandfreien Zustand hin untersuchen. Diese Systeme haben jedoch den Nachteil, daß sie einen plötzlich auftretenden Werkzeugtotalbruch nicht rechtzeitig erkennen können und somit der durch einen Werkzeugbruch verursachte Folgeschaden oft nicht abgewendet werden kann.

Aus der Patentanmeldung P 36 08 572.3-14 ist ein Verfahren zur berührungslosen Bruch-und Verschleißüberwachung von Werkzeugen bekannt, bei dem die Lageänderung zweier benachbarter Teile, von denen mindestens eines durch die Zerspanung mit Kräften beaufschlagt wird, ständig induktiv gemessen und überwacht wird. Die Verformung eines Werkzeuges, eines Werkzeugträgers oder des Werkzeuggrundhalters wird dabei als Maß für den Verschleiß des Werkzeuges genommen, da mit zunehmendem Verschleiß die Kraft auf das Werkzeug zunimmt.

Besonders vorteilhaft ist, daß vorhandene Maschinen verfahrensgemäß nachgerüstet werden können, ohne daß dazu Änderungen an der Werkzeugmaschine erforderlich sind. Die Maschine wird in ihrem Spannungs-und Leistungsverhalten nicht beeinflußt. Aufwendige Voruntersuchungen sind nicht notwendig.

Nachteilig bei diesem Verfahren ist das Magnetfeld, dem die Maschinenteile ausgesetzt werden, daß für Bruch-und Verschleißüberwachung zwei Sensoren benötigt werden und daß das Verfahren relativ unempfindlich und teilweise sehr temperaturabhängig ist. Das bedingt unter anderem daß die Geometrie des Magnetfeldes und der Meßpunkt bzw. die Meßpunkte sorgfältig gewählt werden müssen. Das Anbringen der notwendigen Magnete ist sehr aufwendig.

Aufgabe der Erfindung ist es daher, die Nachteile des bekannten Verfahrens zu beseitigen.

Die Aufgabe wird nach der Erfindung durch ein Verfahren gelöst, bei dem die Lageänderung mittels eines Wegaufnehmers überwacht wird und bei dem die Änderung der Lage bzw. die Überschreitung eines vorgegebenen Grenzwertes ein Signal abgibt. Der Wegaufnehmer ist auf einem der Teile angebracht und seine aktive Fläche steht dem anderen Teil bzw. einem Bedämpfungsstück, das mit dem anderen Teil fest verbunden ist, dicht gegenüber. Bei geeigneter Anbringung des Wegaufnehmers werden die den verschiedenen Betriebszuständen entsprechenden verschiedenen Belastungszustände Abständsänderungen zwischen den beiden benachbarten Teilen hervorrufen. Die Abstandsänderung bewirkt eine Änderung der Ausgangsspannung am Wegaufnehmer. Die Ausgangsspannung ist so ein Maß für die verschiedenen Betriebszustände. Sie kann mit Referenzwerten als Grenzwerten verglichen werden, so daß bei Überschreitung der Grenzwerte ein Signal abgegeben wird.

Das erfindungsgemäße Verfahren benötigt kein Magnetfeld. Mit einem Sensor wird sowohl die Bruch-als auch die Verschleißüberwachung durchgeführt. Die Wahl der Meßstellen ist gegenüber dem bekannten Verfahren unkritisch.

Besonders vorteilhaft ist der induktive Wegaufnehmer. Der induktve Wegaufnehmer enthält als aktives Element einen Oszillator. Der Oszillator erzeugt ein hochfrequentes Wechselfeld, das an der aktiven Fläche des Wegaufnehmers austritt. Wird in dieses Feld ein elektrisch leitendes Material gebracht, so wird dort ein Wirbelstrom induziert. Der Wirbelstrom entzieht dem Oszillator Energie. Die Belastung des Oszillatorschwingkreises bewirkt eine Verkleinerung der Schwingamplitude. Die Verkleinerung der Amplitude wird von der nachgeschalteten Elektronik in eine Spannungsänderung umgewandelt. Je näher das leitende Material zur aktiven Fläche des Sensors kommt, desto mehr Energie wird dem Oszillator entzogen und desto kleiner wird die Ausgangsspannung. Damit ist die Ausgangsspannung ein Maß für den Abstand der überwachten benachbarten Maschinenteile und damit für die verschiedenen Betriebszustände.

In einer besonderen Ausführungsform werden der Wegaufnehmer und erforderlichenfalls ein Bedämpfungsstück auf Magnete montiert. Damit kann der Wegaufnehmer mit oder ohne Bedämpfungsstück einfach ohne zusätzlichen Montageaufwand an verschiedenen Stellen der Werkzeugmaschine montiert werden. Damit können auf einfache Weise jene Stellen an der Werkzeugmaschine ermittelt werden, wo die beim Zerspanen auftretenden Kräfte an der Werkzeugmaschine eine möglichst große Verformung hervorrufen. Diese Stellen sind für die verschiedenen Werkzeugmaschinentypen unterschiedlich. In den schematischen Zeichnungen Fig.

1 und 2 sind Ausführungsbeispiele des erfindungsgemäßen Verfahrens dargestellt.

Fig. 1 zeigt die schematische Darstellung der Montage eines Wegaufnehmers am Gehäuse einer Drehmaschine hinter dem Werkzeugrevolver,

Fig. 2 zeigt die schematische Darstellung eines Wegaufnehmers mit Bedämpfungsstück.

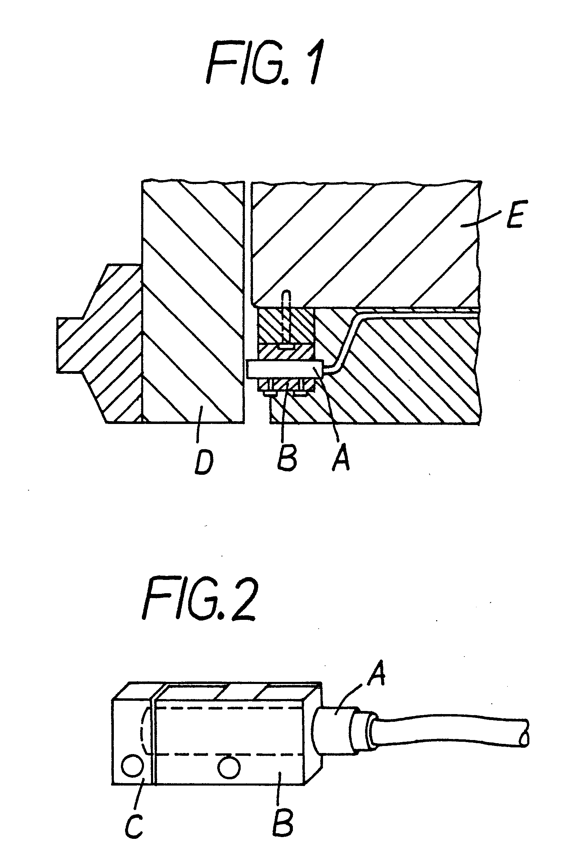

Für eine Werkzeugmaschine mit Werkzeugrevolver ist die in Fig. 1 gezeigte Anordnung für das erfindungsgemäße Verfahren besonders geeignet. Der Wegaufnehmer (A) ist mit einem Halter (B) am Gehäuse (E) der Drehmaschine hinter dem Werkzeugrevolver (D) beim aktiven Werkzeug so befestigt, daß die aktive Seite des induktiven Wegaufnehmers ca. 1,2 mm von der Revolverscheibe entfernt ist. Durch die verschiedenen Belastungszustände beim Zerspanen ändert sich der Abstand zwischen der Revolverscheibe (D) und dem induktiven Wegaufnehmer (A) und damit die Ausgangsspannung des Wegaufnehmers.

Bei zerspanenden Maschinen ohne Werkzeugrevolver wird vorzugsweise ein Wegaufnehmer mit Bedämpfungsstück entsprechend Fig. 2 eingesetzt.

Der Wegaufnehmer (A) ist im Halter (B) befestigt. Das maschinenfremde Bedämpfungsstück (C) ist dem Sensor gegenübergestellt. Der Halter (B) und das Bedämpfungsstück (C) werden an einer geeigneten empfindlichen Stelle auf die Werkzeugmaschine aufgeschraubt. Die verschiedenen Belastungszustände der Werkzeugmaschine ändern den Abstand zwischen dem Halter (B) und dem Bedämpfungsstück (C) und damit die Ausgangsspannung des Wegaufnehmers.

**Ansprüche**

1. Verfahren zur berührungslosen Bruch-, Verschleiß-und Kollisionsüberwachung von wechselbaren Werkzeugen in Werkzeugmaschinen, **dadurch gekennzeichnet,** daß die relative Lageänderung zweier benachbarter Teile der Werkzeugmaschine, von denen mindestens eines durch die beim Zerspanen auftretenden Kräfte beansprucht ist, mittels eines Wegaufnehmers überwacht wird und daß bei deren Änderung bzw. bei Überschreitung eines vorgebbaren Grenzwertes ein Signal abgegeben wird.

2. Vorrichtung zur Durchführung des Verfahrens zur berührungslosen Bruch-, Verschleiß-und Kollisionsüberwachung von wechselbaren Werkzeugen in Werkzeugmaschinen, dadurch gekennzeichnet, daß ein induktiver Wegaufnehmer auf einem Teil der Werkzeugmaschine angebracht ist, so daß seine aktive Fläche einem anderen Teil der Werkzeugmaschine dicht gegenübersteht, wobei mindestens eines dieser Teile durch die beim Zerspanen auftretenden Kräfte beansprucht ist.

3. Vorrichtung zur Durchführung des Verfahrens nach Anspruch 1, dadurch gekennzeichnet, daß der Wegaufnehmer an einer Drehmaschine mit Werkzeugrevolver am Gehäuse hinter der Revolverscheibe nahe beim aktiven Werkzeug befestigt ist.

4. Vorrichtung nach den Anspruch 2, dadurch gekennzeichnet, daß der Wegaufnehmer auf dem gleichen Bauteil der Maschine einem geeigneten Bedämpfungsstück, das fest mit der Maschine verbunden ist, dicht gegenübersteht.

5. Vorrichtung zur Ermittlung des günstigsten Anbringungspunktes für den Wegaufnehmer nach Anspruch 1, dadurch gekennzeichnet, daß der Wegaufnehmer und erforderlichenfalls das Bedämpfungsstück auf Magnete montiert und nur mit den Magneten an verschiedenen Stellen der Werkzeugmaschine anzubringen sind.

# FIG. 1

E

D    B    A

# FIG.2

A

C    B